# FASCICULE DE BREVET EUROPEEN

(11) **EP 4 289 253 B1**
(45) Date de publication et mention de la délivrance du brevet: **19.03.2025**
(21) Numéro de dépôt: 23175744.4
(22) Date de dépôt: 26.05.2023
(51) Int. Cl.: A01D 45/06, A01D 45/30, A01F 11/02, D01B 1/00

(54) **DISPOSITIF DE TRAITEMENT DE TIGES VÉGÉTALES COMPORTANT DES CAPSULES DE GRAINES**
VORRICHTUNG ZUR BEHANDLUNG VON PFLANZENSTENGELN MIT SAMENKAPSELN
DEVICE FOR PROCESSING PLANT STEMS COMPRISING SEED CAPSULES

(30) Priorité: 10.06.2022 FR 2205599
(43) Date de publication de la demande: 13.12.2023
(73) Titulaire: N.V. Depoortere, 8791 Beveren-Leie (BE)
(72) Inventeur: DEPOORTERE, Rik, 8908 VLAMERTINGE (BE); SIMOENS, Rudy, 9870 ZULTE (BE)
(74) Mandataire: Cabinet Beau de Loménie

(56) Documents cités:
- EP-A1- 0 332 726
- BE-A- 424 702
- FR-A- 829 239
- FR-A1- 2 562 916
- FR-A1- 2 646 587

## Description

### Domaine Technique

La présente invention concerne un dispositif pour le traitement de tiges végétales, notamment de lin, pouvant se présenter sous la forme d'andains et comportant des capsules contenant les graines. La présente invention concerne notamment l'étape de séparation des capsules, notamment éclatées, des tiges végétales sur lesquelles elles se trouvent.

### Technique antérieure

Le lin est une plante à fibres. Pour faciliter l'extraction des fibres en vue de leur utilisation notamment dans l'industrie textile, les tiges de lin subissent une opération de rouissage. Cette opération nécessite que lors de la récolte du lin, après l'arrachage des tiges, celles-ci soient déposées sur le sol sous la forme d'andains, consistant en une nappe continue de tiges parallèles entre elles et alignées dans le sens perpendiculaire à l'avancement de la machine d'arrachage. L'andain est laissé sur le champ pendant une durée suffisante pour que les microorganismes, présents dans le sol, réalisent la dégradation biologique des ciments pectiques qui lient les fibres entre elles. Lorsque cette dégradation est suffisante, le lin est ramassé en vue d'être teillé c'est-à-dire d'être traité dans un site industriel pour l'extraction des fibres et leur nettoyage en vue de leur utilisation dans l'industrie textile.

La dégradation biologique dépend des conditions d'humidité et d'ensoleillement auxquelles sont soumises les tiges. On comprend que ces conditions peuvent varier selon que la partie de tige est tournée vers le sol ou vers le ciel. C'est pourquoi on procède en cours de rouissage à une opération consistant à retourner l'andain sur le champ.

Cette opération dite de retournage est réalisée par un engin, automoteur ou tracté qui comporte des moyens de ramassage, aptes à prélever l'andain du sol sous forme d'une nappe continue, des moyens de retournage aptes à retourner sur elle-même ladite nappe ramassée et des moyens d'étalage aptes à étaler sur le sol la nappe ainsi retournée. Un tel engin est par exemple décrit dans le document FR.2.484.768.

Par ailleurs, au-delà des fibres contenues dans les tiges, le traitement du lin comprend également la récupération des graines de semence présentes sur les tiges. De telles graines sont présentes dans des coques, appelées capsules, présentes à l'extrémité des tiges de lin. Les graines de semence sont récupérées seulement sur une petite partie de la production. La récupération des graines est effectuée quelques jours seulement après l'arrachage des tiges, lors d'une étape de retournage, lorsque les graines ont terminées leur maturation mais n'ont pas été encore ou trop dégradées par le rouissage.

Ainsi, durant l'opération de retournage, ou bien durant l'étape de récolte conduisant à l'étalage, sur le sol, des tiges végétales sous la forme d'andains, les capsules des tiges de lin peuvent traitées pour permettre la récupération des graines qui s'y trouvent, sans pour autant abîmer les tiges destinées à être teillées ultérieurement.

A cet effet, il est connu d'utiliser des engins automoteurs ou trainés, appelés écapsuleuses, permettant de récupérer les graines contenues dans les capsules. De telles écapsuleuses comportent généralement des moyens de ramassage permettant de récupérer les tiges de lin présentes sur le sol sous forme d'andain, puis des moyens de traitement desdites tiges de lin. Dans un premier temps, la partie haute, ou apicale, des tiges dans laquelle se trouvent les capsules, est éclatée et écrasée, par exemple en passant à travers une fente de dimensions définies, puis entre deux rouleaux écraseurs adjacents, de manière à obtenir un éclatement et un écrasement des capsules. Puis la partie apicale des tiges est battue, en passant dans un batteur, avant que les capsules éclatées et les graines restant encore sur les tiges ne soient séparées des tiges. Une fois les capsules et les graines séparées de tiges, celles-ci sont séparées entre elles pour ne récupérer que les graines, tandis que les tiges sont étalées sur le sol sous la forme d'andain.

La séparation des capsules éclatées et des tiges s'effectuent à l'aide de rouleaux, ou moulins, disposés parallèlement au plan de la nappe de tiges, avec une extrémité avant située vers le milieu des tiges, et une extrémité arrière située au-delà de la partie apicale des tiges, de manière à repousser les capsules éclatées et les graines présentes à la surface des tiges, au-delà dudit bord de tiges. A cet effet, les rouleaux peuvent comprendre, à leur surface, des éléments de raclage destinés à racler la surface des tiges végétales, et sont mis en rotation autour de leur axe longitudinal, de telle sorte que leur surface vient se déplacer du centre des tiges vers ledit bord des tiges lorsqu'ils sont en contact avec les tiges.

Des dispositifs de séparation de capsules sont notamment décrits dans les documents FR 2 646 587, FR 2 562 916, FR 829 239 ou encore BE 424 702.

Cependant, les tiges végétales, et en particulier de lin, sont formées d'une multitude de faisceaux fibreux, souvent fins, qui peuvent venir s'accrocher sur les éléments tournants ou autres dispositifs de traitement des tiges végétales. En particulier, il est fréquent que des fibres de tiges végétales viennent s'enrouler autour des rouleaux en rotation, et en particulier autour des paliers de rotation via lesquels les rouleaux sont montés en rotation sur le dispositif de traitement, ce qui peut conduire à un enchevêtrement et donc à une usure ou, pire, à des blocages desdits rouleaux voire à des échauffements pouvant aller jusqu'à des départs de feu. De plus, il est également nécessaire d'entretenir régulièrement de tels rouleaux pour éviter l'accumulation de telles fibres autour d'eux, ce qui pourrait accélérer encore plus l'enroulement de nouvelles fibres et diminuer l'efficacité du balayage.

Enfin, en cas de blocage du rouleau par accumulation de fibres autour, le désenchevêtrement du rouleau est souvent rendu difficile par la quantité et la finesse des fibres qui y sont enroulées, et nécessite le plus souvent le démontage complet du rouleau, ce qui entraîne un arrêt supplémentaire du dispositif de traitement, souvent long, alors même que la période pour récupérer les graines de semence est très courte.

### Exposé de l'invention

La présente invention vise à résoudre les différents problèmes techniques énoncés précédemment. En particulier, la présente invention vise à proposer un dispositif de traitement de tiges végétales comportant des capsules, qui soit moins sensible aux fibres présentes à la surface des tiges végétales. Plus précisément, la présente invention vise à proposer un dispositif de traitement de tiges végétales comportant des capsules, qui limite les enroulements et l'accumulation des fibres lors de la séparation des capsules et des tiges végétales.

Ainsi, selon un aspect, il est proposé un dispositif de traitement de tiges végétales comportant des capsules de graines, notamment éclatées, selon la revendication 1.

Ainsi, grâce à une extrémité libre du premier moulin, les fibres des tiges végétales ne peuvent plus que très difficilement venir s'y enrouler et s'y enchevêtrer. En effet, l'absence de palier de rotation à l'extrémité avant du premier moulin, réduit les risques d'accrochage et d'accumulation de fibres des tiges végétales à cet endroit particulier. Au contraire, dans le dispositif selon la présente invention, le premier moulin est maintenu par son extrémité arrière, ce qui laisse l'extrémité avant totalement libre et ce qui permet de la réaliser ou la conformer de manière adéquate pour y limiter les points d'accroche des fibres de tiges végétales. Grâce à une telle extrémité avant libre, on limite donc les risques d'enroulement et d'enchevêtrement, et donc les risques d'endommagement, d'usure voire de blocage du premier moulin, ce qui réduirait la performance et la rentabilité du dispositif de traitement et pourrait même conduire à des risques d'incendie.

Préférentiellement, le dispositif comprend des moyens d'acheminement configurés pour acheminer les tiges végétales, selon une première direction, sous forme d'une nappe continue s'étendant dans un plan.

Préférentiellement, l'extrémité avant du premier moulin est une extrémité arrondie, de préférence lisse, par exemple une extrémité convexe telle un cône.

L'extrémité avant du premier moulin est conçue de manière à limiter les points d'accroche et de manière à y faciliter le glissement des fibres. A cet effet, l'extrémité avant du premier moulin est choisie arrondie, et de préférence lisse, de manière à ne pas former d'obstacle à la circulation des fibres dessus, mais au contraire, de manière à permettre le glissement des fibres et leur entraînement par le reste de la nappe continue de tiges végétales circulant dans le dispositif de traitement.

Le premier moulin est monté sur le châssis du dispositif de traitement par son extrémité arrière.

Le premier moulin est ainsi toujours maintenu selon son axe longitudinal, mais uniquement du côté arrière, et non par les deux extrémités, de manière à garder l'extrémité avant libre. De plus, le maintien du premier moulin par son extrémité arrière permet un entraînement en rotation facilité et limitant, du côté arrière, les éventuels enchevêtrements ou accrochages de l'extrémité apicale des fibres de tiges végétales.

Le dispositif de traitement comprend un moteur monté entre le châssis et le premier moulin afin de faire tourner le premier moulin sur lui-même, et la partie du moteur solidaire du premier moulin, en l'occurrence le rotor du moteur, est montée à l'intérieur du premier moulin, de préférence sensiblement au milieu du premier moulin et plus préférentiellement à proximité du centre de gravité du premier moulin.

Préférentiellement, le stator du moteur est monté à l'intérieur du premier moulin, de préférence sensiblement au milieu du premier moulin et plus préférentiellement à proximité du centre de gravité du premier moulin. En particulier, le moteur lui-même, c'est-à-dire le stator et le rotor, est monté à l'intérieur du premier moulin, de préférence sensiblement au milieu du premier moulin et plus préférentiellement à proximité du centre de gravité du premier moulin.

Le premier rouleau est monté en rotation, notamment autour de son axe longitudinal, de manière à accentuer le balayage de la surface des tiges végétales. L'entraînement en rotation du premier moulin par rapport au dispositif de traitement est effectué via un moteur. En particulier, le premier moulin est solidaire du moteur d'entraînement par une portion située à l'intérieur du premier moulin, et idéalement à proximité du centre de gravité du premier moulin. Il est ainsi possible d'obtenir un entraînement stable et limitant les contraintes mécaniques au niveau de la liaison de solidarisation entre le premier moulin et son moteur d'entraînement. Une telle configuration permet d'obtenir un premier moulin plus robuste dans le temps, et moins sujet à des déformations.

Le premier moulin comporte également des moyens de raclage montés sur la surface périphérique du corps, les moyens de raclage s'étendant sensiblement entre l'extrémité avant et l'extrémité arrière du premier moulin, par exemple selon une direction longitudinale ou selon une forme hélicoïdale, et comportant chacun une extrémité avant et une extrémité arrière.

Les moyens de raclage sont les éléments du premier moulin qui vont venir directement en contact avec les tiges végétales pour venir racler leur surface afin d'y séparer les capsules éclatées et les graines qui y sont présentes. Les moyens de raclage sont donc des éléments essentiels du dispositif de traitement, mais également des éléments amenés à s'user dans le temps.

Préférentiellement, les moyens de raclage sont montés de manière amovible sur la surface périphérique du corps du premier moulin, par exemple par serrage latéral, de préférence entre leurs extrémités avant et arrière, et/ou par maintien au niveau de leurs extrémités avant et arrières.

Les moyens de raclage sont ainsi prévus pour être démontés du premier moulin, notamment lorsqu'ils sont trop usés et qu'ils doivent être remplacés. Il est ainsi possible de ne changer qu'une partie du premier moulin, tout ou partie des moyens de raclage, et non le premier moulin intégralement, lorsque ce dernier est usé au bout d'une durée déterminée d'utilisation. En particulier, le reste du premier moulin peut être conservé à l'identique, notamment le corps, la liaison avec le moteur d'entraînement ou la première extrémité lisse, ce qui limite les coûts d'entretien du premier moulin et la pénibilité du travail d'entretien.

Préférentiellement, le premier moulin comporte un cône, de préférence lisse, monté sur l'extrémité avant du premier moulin, par exemple à l'extrémité avant du corps du premier moulin, et recouvrant, au moins partiellement, l'interface entre les moyens de raclage et la surface périphérique du corps du premier moulin au niveau de l'extrémité avant.

Le premier moulin peut comprendre une extrémité avant qui recouvre l'extrémité avant des moyens de raclage. Une telle configuration permet notamment d'éviter l'accroche des fibres de tiges végétales à l'interface entre les moyens de raclage et la surface du premier moulin. En particulier, l'extrémité avant de l'interface entre chaque moyen de raclage et le corps du premier moulin est recouverte par le cône d'extrémité avant du premier moulin. Le cône permet donc d'une part d'éviter l'accrochage ou l'enroulement des fibres sur le premier moulin, mais également sur les moyens de raclage. De plus, le cône permet également d'améliorer le montage mécanique de ces derniers sur le corps du premier moulin, notamment au niveau de l'extrémité avant du premier moulin.

Préférentiellement, le premier moulin est monté sur le châssis via un moyen d'inclinaison configuré pour incliner l'axe longitudinal du premier moulin par rapport au plan de la nappe continue de tiges végétales, de préférence de manière à éloigner, l'un de l'autre, l'extrémité avant du premier moulin et la nappe continue.

Préférentiellement, le premier moulin est monté sur le châssis via un moyen de coulissement configuré pour permettre un éloignement vertical du premier moulin par rapport au plan de la nappe continue de tiges végétales.

Afin d'éviter les blocages ou éventuellement les pannes ou casses en cas d'accumulation de tiges végétales au niveau de l'entrée du dispositif de traitement, ou bien en cas de présence de corps étrangers tels que des pierres, le premier moulin est monté pivotant et/ou coulissant sur le châssis du dispositif de traitement, notamment verticalement, de manière à permettre au premier moulin de s'éloigner de la nappe continue de tiges végétales. Un tel pivotement et/ou coulissement peut justement permettre de laisser passer ledit corps étranger ou ledit amas sans créer de contrainte mécanique dans le dispositif de traitement, notamment au niveau de la liaison entre le premier moulin et le châssis. En particulier, le premier moulin étant monté sur le châssis uniquement par son extrémité arrière, il suffit juste de prévoir un mécanisme de pivotement et/ou coulissement entre celle-ci et le châssis, pour obtenir le pivotement et/ou le coulissement voulu du premier moulin.

Préférentiellement, le dispositif de traitement comporte en outre un deuxième moulin identique au premier moulin, les premier et deuxième moulins étant disposés de part et d'autre du plan de la nappe continue de tiges végétales, et au moins une portion du deuxième moulin s'étend sensiblement parallèlement au plan de la nappe continue.

Les deux moulins sont de préférence parallèles entre eux et viennent balayer, simultanément, les surfaces supérieure et inférieure de la nappe continue de tiges végétales, de manière à y enlever les capsules et les graines présentes.

Préférentiellement, le premier et/ou le deuxième moulin est monté sur le châssis via un moyen d'écartement commandé, configuré pour modifier la distance entre le premier moulin et le deuxième moulin par translation du premier et/ou du deuxième moulin, de préférence de manière à modifier l'espacement entre les premier et deuxième moulins au niveau de la nappe continue.

Les deux moulins étant montés sur le châssis uniquement par leur extrémité arrière, il suffit juste de prévoir un mécanisme de translation entre celles-ci et le châssis, pour obtenir l'écartement voulu entre le premier et le deuxième moulin, tout en gardant les deux moulins parallèles entre eux. Une telle modification de l'écartement des deux moulins peut notamment être utilisée lorsque la nappe devient plus épaisse, par exemple en raison d'une accumulation plus rapide des tiges végétales au niveau des moyens de ramassage. L'augmentation de l'espacement entre les deux moulins peut alors permettre un meilleur raclage des surfaces de la nappe de tiges végétales, sans pour autant venir entraîner les tiges végétales en même temps que les capsules et les graines. Le moyen d'écartement est commandé, de manière à pouvoir choisir l'espacement entre les deux moulins.

Selon un autre aspect, il est également proposé un engin, automoteur ou tracté, comportant un système d'écapsulage, ou écapsuleuse, comprenant un dispositif de traitement de tiges végétales tel que décrit précédemment, pour balayer la surface des tiges végétales comportant des capsules de graines, notamment éclatées.

Le dispositif de traitement peut donc être intégré au sein d'un engin agricole comportant notamment un système d'écapsulage.

Préférentiellement, l'engin comprend des moyens d'acheminement configurés pour acheminer, selon une première direction, les tiges végétales entre les différents dispositifs de traitement de l'engin, sous forme d'une nappe continue s'étendant dans un plan.

Préférentiellement, ledit dispositif de traitement est monté, dans ledit système d'écapsulage et dans le sens d'acheminement des graines, en aval d'un dispositif d'écrasement et d'éclatement des capsules de tiges végétales, et en amont d'un dispositif de séparation, de manière à successivement casser les capsules des tiges végétales, séparer lesdites capsules cassées des tiges végétales et isoler les graines du reste des capsules, lesdites opérations étant réalisées de manière continue pendant le déplacement de l'engin.

Le dispositif de traitement est positionné après les moyens d'écrasement et d'éclatement des capsules, afin de séparer les capsules éclatées et les graines d'une part, et les tiges végétales d'autre part.

Préférentiellement, l'engin comporte également des moyens de ramassage et des moyens d'étalage, ledit dispositif de traitement étant monté en aval des moyens de ramassage et en amont des moyens d'étalage, de manière à successivement ramasser les tiges végétales, par exemple au moins un andain, traiter les tiges végétales et étaler les tiges végétales, lesdites opérations étant réalisées de manière continue pendant le déplacement de l'engin.

Le système d'écapsulage peut être monté sur différents types d'engins agricoles, notamment des engins de retournage d'andain configurés pour ramasser, retourner et étaler les tiges végétales sous forme d'andain sur le sol. Dans ce cas, le système d'écapsulage peut être monté après ramassage, et éventuellement retournage, des tiges végétales, et avant l'étalage des tiges végétales, débarrassées de leurs capsules, sur le sol.

### Brève description des dessins

[Fig. 1] La figure 1 représente une vue en perspective d'un moulin pour un dispositif de traitement selon la présente invention ;
[Fig. 2] La figure 2 représente une vue en coupe du moulin illustré à la figure 1 ;
[Fig. 3] La figure 3 représente une vue de côté d'un dispositif de traitement comportant deux moulins tels qu'illustrés aux figures 1 et 2 ;
[Fig. 4] La figure 4 représente le dispositif de traitement de la figure 3, avec un des deux moulins inclinés par rapport à l'horizontale ;
[Fig. 5] La figure 5 représente le dispositif de traitement de la figure 3, avec les deux moulins espacés l'un de l'autre selon la verticale ; et
[Fig. 6] La figure 6 représente, en partie et en vue de dessus, un système d'écapsulage avec des dispositifs de traitement tels qu'illustrés aux figures 3 à 5.

### Description des modes de réalisation

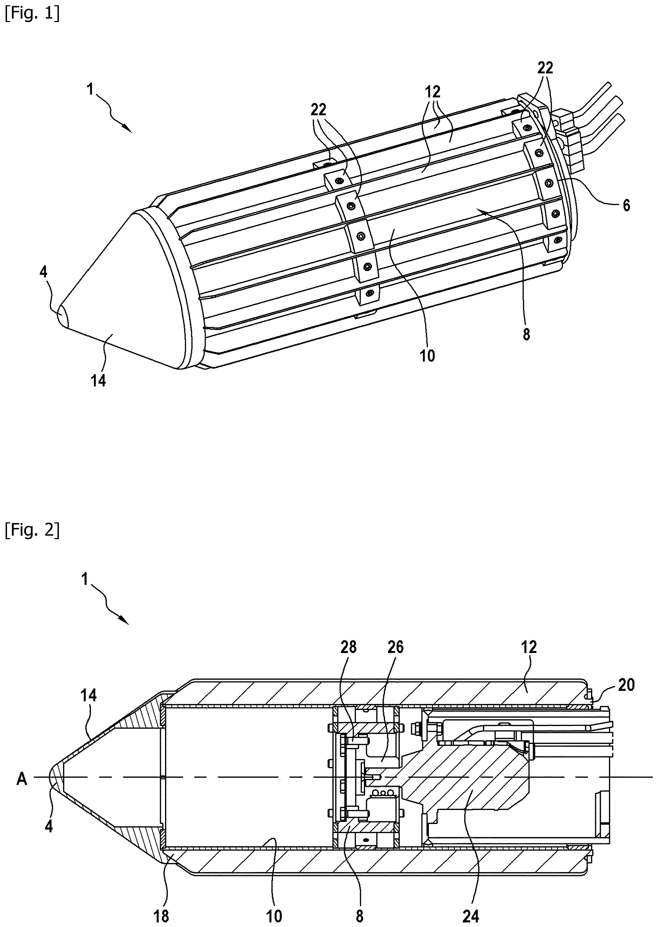

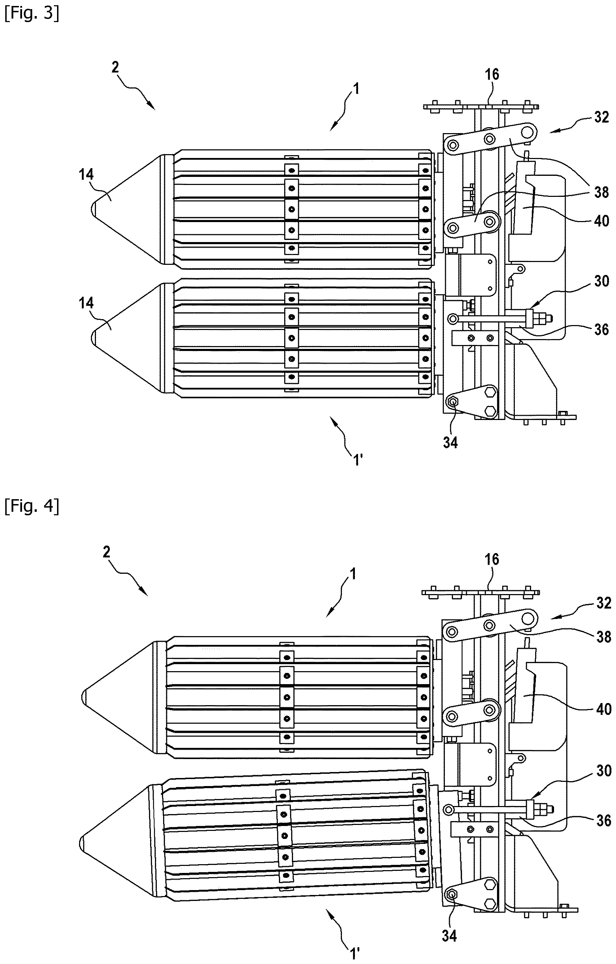

Les figures 1 et 2 représentent, en perspective et en coupe, des vues d'un moulin 1 pour un dispositif de traitement 2 tel qu'illustré sur les figures 3 à 6.

Le moulin 1 présente une forme générale longitudinale avec une extrémité avant 4 et une extrémité arrière 6, et s'étend autour d'un axe longitudinal A. Le moulin 1 comporte un corps 8, par exemple de forme générale cylindrique ou conique, avec une surface périphérique 10, ou paroi périphérique, et des moyens de raclage 12 montés sur la surface périphérique 10 du corps 8. Un cône 14 est prévu à l'extrémité avant 4 du moulin 1, tandis que l'extrémité arrière 6 est configurée pour permettre le montage du moulin 1 sur un châssis 16 (voir figures 3 à 6).

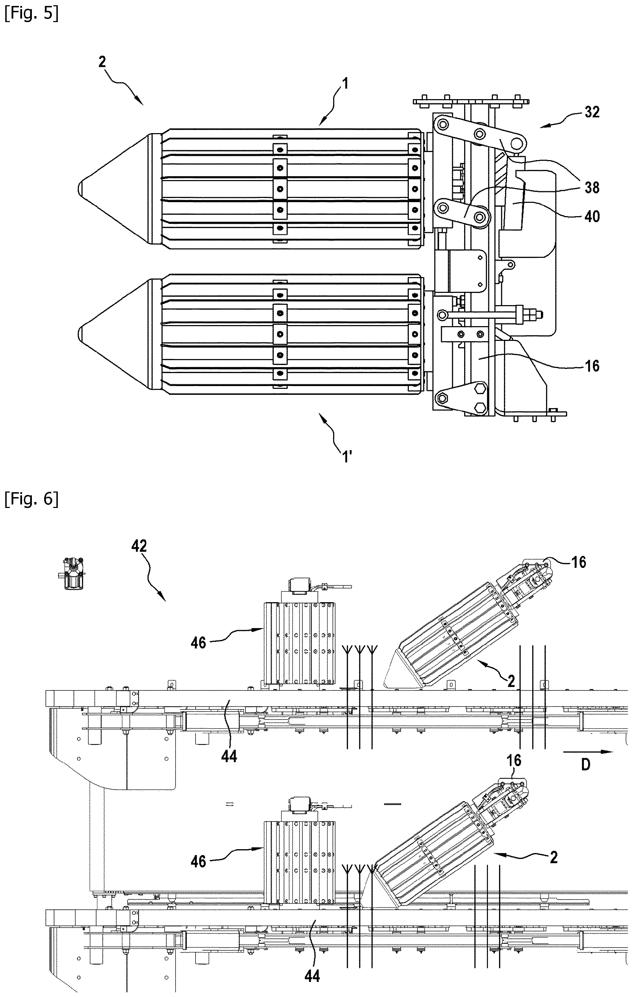

Le moulin 1 est destiné à séparer des capsules et des graines présentes à la surface d'une nappe continue de tiges végétales. La nappe de tiges végétales, par exemple un andain ramassé par un dispositif de ramassage adapté, est acheminée selon une direction D (voir figure 6) le long de différents dispositifs permettant un traitement des tiges végétales, tel que : leur retournement et/ou leur écapsulage. En particulier, les tiges végétales sont orientées sensiblement perpendiculairement à la direction D. Une fois les capsules éclatées, celles-ci sont séparées des tiges végétales sur lesquelles elles se trouvent, par un dispositif de traitement 2 comportant des moulins 1. Les moulins 1 viennent notamment balayer la surface de la nappe continue de tiges végétales avec les moyens de raclage 12, de manière à repousser les capsules et graines au-delà de la partie apicale des tiges végétales, et les faire tomber vers un autre dispositif, par exemple configuré pour séparer les capsules et les graines.

Les moyens de raclage 12 sont montés sur la surface périphérique 10 du corps 8 du moulin 1, et viennent former une partie de la surface périphérique du moulin 1. Les moyens de raclage 12 sont destinés à venir directement en contact avec les tiges végétales, dont ils balayent la surface, lorsque le moulin 1 tourne en rotation autour de son axe. Les moyens de raclage 12 s'étendent entre l'extrémité avant 4 à l'extrémité arrière 6 du moulin 1, et peuvent ainsi comporter une extrémité avant 18 disposée à proximité de l'extrémité avant 4 du moulin 1, et une extrémité arrière 20 disposée à proximité de l'extrémité arrière 6 du moulin 1. Les moyens de raclage 12 peuvent notamment s'étendre selon une direction longitudinale, parallèle à la direction longitudinale A du moulin 1 comme illustré sur les figures 1 et 2, ou bien peuvent s'étendre sous toute autre forme, par exemple hélicoïdale.

Les moyens de raclage 12 étant destinés à s'user lors de leur utilisation, par frottement sur les tiges végétales, ceux-ci sont montés de préférence de manière amovible sur le moulin 1. Il est alors possible de les remplacer ou de les réparer/rénover lorsqu'ils sont usés ou abîmés, sans avoir à changer l'intégralité du moulin 1. A cet effet, les moyens de raclage 12 peuvent être montés sur le corps 8 au niveau de leurs extrémités 18, 20 et/ou entre leurs extrémités 18, 20.

Par exemple, l'extrémité arrière 20 des moyens de raclage peut comprendre un ergot destiné à coopérer avec un logement correspondant prévu à l'extrémité arrière 6 du moulin 1. De même, l'extrémité avant 18 des moyens de raclage peut également être configurée pour coopérer avec l'extrémité avant 4 du moulin 1, et plus particulièrement avec le cône 14 monté à l'extrémité avant 4 du moulin 1. Ainsi, le cône 14 peut être prévu pour venir recouvrir l'extrémité avant 18 des moyens de raclage 12, et plus particulièrement l'interface entre l'extrémité avant 18 des moyens de raclage 12 et le corps 8. Le cône 14 permet ainsi d'empêcher l'accrochage de fibres végétales au niveau de cette interface.

L'extrémité avant 4, notamment le cône 14, et l'extrémité arrière 6 peuvent également être configurées pour positionner et pour maintenir les moyens de raclage 12 le long de la périphérie de la surface périphérique 10 du corps 8. Ainsi, le cône 14 et l'extrémité arrière 6 peuvent comporter des encoches de coopération avec les extrémités 18, 20 des moyens de raclage 12, de manière à empêcher tout déplacement, en particulier glissement, desdits moyens de raclage 12 autour de la surface périphérique 10 du corps 8, notamment lorsque le moulin 1 tourne autour de son axe longitudinal A et que les moyens de raclage 12 sont soumis à des forces transversales lors du contact avec les tiges végétales.

Par ailleurs, en plus des extrémités avant 18 et arrière 20, les moyens de raclage 12 peuvent également être maintenus sur la surface périphérique 10 du corps 8 entre leurs deux extrémités 18, 20. Par exemple, le moulin 1 peut comprendre des moyens de serrage tels des cales de serrage 22 venant se fixer directement sur la surface périphérique 10 du corps 8, entre les moyens de raclage 12, et venant pincer latéralement, de part et d'autre, les moyens de raclage 12. Les cales de serrage 22 concourent donc à maintenir en position et sur le corps 8, les moyens de raclage 12.

Les moulins 1 sont ainsi prévus pour tourner en rotation autour dudit axe longitudinal A, ce dernier étant orienté dans un plan parallèle au plan de la nappe continue de tiges végétales comprenant la direction D d'acheminement des tiges végétales, lorsque le moulin 1 présente une forme générale cylindrique, mais avec un angle par rapport à la direction D d'acheminement des tiges végétales (voir figure 6). Dans le cas d'un moulin présentant une forme générale conique, l'axe longitudinal A pourra être incliné par rapport au plan de la nappe continue de tiges végétales, de manière à ce que le bord du moulin venant en contact avec les tiges végétales soit parallèle au plan de la nappe de tiges végétales. Dans les deux cas, une portion du moulin 1 s'étend sensiblement parallèlement au plan de la nappe continue, à savoir la portion du moulin 1 la plus proche de la nappe continue.

L'angle entre la direction longitudinale A et la direction D est notamment prévu pour que l'extrémité avant 4 des moulins se situe à proximité du milieu des tiges végétales, et pour que l'extrémité arrière 6 des moulins se situe à proximité ou au-delà de la partie apicale des tiges végétales. De cette manière, les capsules et graines balayées par les moyens de raclage 12 sont déplacées du milieu vers la partie apicale des tiges végétales au fur et à mesure que les tiges végétales se déplacent de l'extrémité avant 4 vers l'extrémité arrière 6 des moulins 1.

Les tiges végétales sont donc acheminées en direction de l'extrémité avant 4 des moulins 1. Or, les tiges végétales, notamment celles de lin, comprennent une multitude de fibres, parfois très fines, dont certaines sont susceptibles de venir s'enrouler autour de n'importe quel obstacle se présentant le long de leur parcours. Afin de limiter l'accumulation et l'enchevêtrement de telles fibres dans le dispositif de traitement 2, et plus particulièrement autour des moulins 1, ceux-ci comportent une extrémité avant 4 qui est libre, en particulier qui est dépourvue de moyen de rotation tel qu'un palier. Dit autrement, le moulin 1 est monté, sur le châssis 16, en porte-à-faux au-dessus ou en-dessous de la nappe continue de tiges végétales. L'extrémité avant libre des moulins 1 permet ainsi de limiter l'accrochage de fibres végétales susceptibles de venir s'y emmêler, comme c'est souvent le cas lorsque les moulins sont montés entre deux paliers.

Afin de limiter encore plus l'accroche de fibres, le moulin 1 comprend une extrémité avant 4 lisse, facilitant le glissement des fibres de dessus. La forme de l'extrémité avant 4 est également configurée pour y faciliter le glissement des fibres. Ainsi, l'extrémité avant 4 du moulin 1 est choisie de forme arrondie, et de préférence de forme convexe afin de guider les fibres au-delà de l'extrémité avant 4 du moulin 1. Par exemple, le moulin 1 est prévu avec le cône 14 monté sur l'extrémité avant 4. Le cône 14 permet de guider les fibres jusqu'aux moyens de raclage 12, tout en limitant les risques d'accrochage ou d'enchevêtrement.

Comme indiqué précédemment, le cône 14 peut venir recouvrir l'extrémité avant 18 des moyens de raclage 12, et donc l'interface entre les moyens de raclage 12 et le corps 8. Le cône 14 forme donc un chapeau recouvrant complètement l'extrémité avant du corps 8 et venant guider les fibres végétales directement sur les moyens de raclage 12. Le cône 14 permet à la fois de limiter l'enchevêtrement des fibres sur l'extrémité avant du moulin 1 et de maintenir l'extrémité avant 18 des moyens de raclage 12.

Avantageusement, le cône 14 peut être monté amovible sur le corps 8. Un tel montage amovible du cône 14 peut notamment faciliter le changement des moyens de raclage 12, en permettant leur retrait et insertion par l'avant du moulin 1. Par ailleurs, et comme cela sera décrit plus bas, un tel cône 14 amovible peut également faciliter le montage et le retrait du moulin 1 sur le châssis, notamment lorsque la liaison est prévue à l'intérieur du corps 8, comme décrit ci-dessous. Dans ce cas, le retrait du cône 14 permet d'accéder facilement à l'intérieur du corps 8 pour y effectuer les opérations de montage/démontage du moulin 1 sur le châssis 16.

Le moulin 1 est ainsi, dans le cas illustré sur les figures, monté par son extrémité arrière 6. En particulier, et comme visible sur la figure 2, le corps 8 présente une extrémité arrière ouverte permettant de glisser le corps 8 autour d'un élément du châssis 16 ou autour d'un élément monté sur le châssis 16. Un tel montage par l'extrémité arrière 6 du moulin 1 et par l'intérieur du moulin 1, permet, ici encore, de limiter les zones d'accroche sur lesquelles des fibres pourraient venir s'enrouler lors du balayage des capsules et des graines par le dispositif de traitement 2.

Sur la figure 2, le corps 8 est positionné autour d'un moteur 24 configuré pour mettre en rotation le moulin 1 par rapport au châssis 16. Plus précisément, le corps 8 vient se solidariser avec le rotor 26 du moteur 24, via des moyens de solidarisation 28, par exemple des vis. En particulier, le positionnement du moteur 24, notamment du stator du moteur 24, est choisi de manière à se trouver à proximité du milieu du moulin 1, et en particulier à proximité du centre de gravité du moulin 1, de manière à limiter les contraintes de torsion dues au poids du moulin 1, au niveau de la solidarisation entre le corps 8 et le moteur 24.

Comme indiqué précédemment, les moyens de solidarisation 28 sont accessibles directement après retrait du cône 14 : une fois celui-ci enlevé, les têtes de vis sont exposées, ce qui permet le montage du corps 8 sur le rotor 26 du moteur 24, ou au contraire le démontage du corps 8. On facilite ainsi les opérations de maintenance sur le moulin 1, notamment si on souhaite remplacer les moyens de raclage 12.

Les figures 3 à 5 représentent une vue de côté du dispositif de traitement 2. Le dispositif de traitement 2 comporte ainsi deux moulins 1, 1' montés de part et d'autre de la nappe continue de tiges végétales, en particulier au-dessus et en-dessous de ladite nappe continue de tiges végétales.

Les deux moulins 1, 1' sont disposés sensiblement parallèlement entre eux, avec un espacement entre eux prévu pour la circulation de la nappe continue de tiges végétales. En venant ainsi balayer, lors de leur rotation, la surface supérieure et inférieure de la nappe continue de tiges végétales, les moulins 1 et 1' empêchent les capsules et les graines de passer entre eux et les acheminent vers une autre direction que les tiges végétales, par exemple vers un dispositif configuré pour séparer les graines des capsules.

Toutefois, lors de la séparation, des corps étrangers ou des amas peuvent se retrouver au sein de la nappe de tiges végétales, ce qui peut venir bloquer les deux moulins 1, 1', voire endommager un ou les deux moulins 1, 1'. Afin de limiter les risques de tels blocages ou d'endommagement, au moins un des moulins 1, 1' est monté pivotant par rapport au plan de la nappe de tiges végétales, et/ou coulissant selon la direction verticale afin de permettre un éloignement de l'extrémité du moulin ou bien du moulin entier par rapport à la nappe continue.

Ainsi, dans l'exemple illustré aux figures 3 à 5, le moulin inférieur 1' est monté sur le châssis 16 via un moyen d'inclinaison 30, tandis que le moulin supérieur 1 est monté sur le châssis 16 via un moyen d'écartement 32. Toutefois, l'invention ne se limite pas à un tel mode de réalisation, et il est parfaitement envisageable de prévoir le moulin supérieur 1 avec un moyen d'inclinaison en lieu et place, ou en plus, du moyen d'écartement, ou bien le moulin inférieur 1' avec un moyen d'écartement en lieu et place, ou en plus, du moyen d'inclinaison.

Le moyen d'inclinaison 30 est prévu entre le moteur 24 et le châssis 16. Le moteur 24 est monté sur le châssis 16 par une liaison pivot 34 permettant un pivotement, notamment de l'axe longitudinal A du moulin 1', par rapport à un axe horizontal. Un tel pivotement, au niveau de l'extrémité arrière 6 du moulin 1' permet donc de modifier la distance séparant l'extrémité avant 4 du moulin 1' et la nappe continue de tiges végétales. Le moteur 24 est par ailleurs relié au châssis via un élément de rappel 36 positionné, dans le cas présent, au-dessus de la liaison pivot 34 et est configuré pour maintenir l'axe longitudinal A du moulin 1' sensiblement parallèle à la nappe continue de tiges végétales. L'élément de rappel 36 peut comprendre un ressort ou bien un élément déformable élastiquement, et est configuré pour exercer une force de rappel de manière à positionner le moulin 1' parallèlement à la nappe de tiges végétales.

Ainsi, en fonctionnement normal, le moulin 1' est parallèle à la nappe de tiges végétales et permet de balayer la surface inférieure de celle-ci. Par contre, en cas de présence d'un corps étranger dans la nappe de tiges végétales, notamment au niveau des extrémités avant 4 des moulins 1, 1', une force va alors s'exercer entre les deux moulins 1, 1' pour les éloigner l'un de l'autre, ce qui va venir créer une force venant s'opposer à l'élément de rappel 36 : ce dernier va alors se déformer élastiquement sous l'effet d'une telle force afin de permettre à l'extrémité avant 4 du moulin 1' de s'éloigner de la nappe continue de tiges végétales, pour laisser passer le corps étranger.

Une fois le corps étranger passé, il n'y a alors plus de force s'exerçant entre les deux moulins 1, 1' et l'élément de rappel 36 peut alors, par effet élastique, repositionner le moulin 1' dans sa position initiale, pour continuer de balayer la surface inférieure de la nappe continue.

Le moyen d'écartement 32 est prévu entre le moteur 24 et le châssis 16. Le moteur 24 est monté sur le châssis 16 par une liaison glissière permettant un coulissement, notamment vertical, du moulin 1. Un tel coulissement permet donc de modifier la distance séparant les deux moulins 1, 1'. Le moteur 24 est par exemple monté sur le châssis 16 via deux bielles 38 : une extrémité de chaque bielle 38 est reliée pivotante sur le châssis 16 et l'autre extrémité est montée pivotante sur le moteur 24, les liaisons pivot étant horizontales.

Ainsi, en fonctionnement normal, le moulin 1 est parallèle à la nappe de tiges végétales et permet de balayer la surface supérieure de celle-ci. Par contre, en cas de contrainte, notamment verticale, s'exerçant entre les deux moulins 1, 1', le moulin supérieur 1 va pouvoir se translater verticalement par rotation des deux bielles 38. Une fois l'origine de la contrainte disparue, et en raison de son propre poids, le moulin supérieur 1 va alors être amené à retourner dans sa position initiale, par rotation des deux bielles 38 dans l'autre sens. Le moyen d'écartement 32 offre donc un mouvement de liberté au moulin supérieur 1, en lui permettant un coulissement vers le haut lorsque les contraintes s'exerçant entre les deux moulins 1, 1' sont suffisantes pour surmonter le propre poids du moulin supérieur 1.

Alternativement, ou en complément, le moyen d'écartement 32 peut également être commandé, afin de permettre un contrôle direct de l'écartement entre les deux moulins 1 et 1'. Par exemple, le moyen d'écartement 32 peut comporter un piston 40 monté entre une extrémité d'une des bielles 38 et le châssis 16. L'actionnement du piston 40 permet alors de faire pivoter les deux bielles 38, et donc de faire coulisser le moulin 1 verticalement.

Afin de garder un coulissement libre du moulin 1 selon la direction verticale, malgré la présence du piston 40, le moyen d'écartement 32 peut comprendre une liaison glissière, avantageusement verticale, entre la bielle 38 et le piston 40. Une telle liaison glissière permet un mouvement libre de la bielle 38, et donc du moulin 1, par rapport au piston 40, notamment lorsque le moulin 1 est levé verticalement par un corps étranger ou un amas présent dans la nappe continue.

La figure 6 illustre, en partie, un système d'écapsulage 42 comportant deux dispositifs de traitement 2 selon la présente invention. Plus particulièrement, le système d'écapsulage 42 peut être intégré dans un système plus complexe, par exemple dans un engin de retournage d'andain et d'écapsulage.

Le système d'écapsulage 42 comprend, dans le cas présent, deux lignes configurées pour traiter, chacune, une nappe continue de tiges végétales et comportant, chacune, notamment un dispositif de traitement 2. Le système permet donc de traiter, en parallèle, deux nappes continues de tiges végétales. Un tel système peut notamment se retrouver dans des engins configurés pour traiter deux andains simultanément.

Ainsi, chaque ligne comporte des moyens d'acheminement 44 configurés pour acheminer la nappe de tiges végétales selon la première direction D, entre les différents dispositifs de traitement. Les moyens d'acheminement 44 peuvent se présenter sous forme de bandes souples mobiles entre lesquelles sont pincées les tiges végétales pour être entraînées entre les différents dispositifs de traitement.

Ainsi, le système d'écapsulage 42 peut être monté en aval, dans le sens de déplacement de la nappe continue, d'un dispositif de retournage.

Le système d'écapsulage 42 comprend, dans un premier temps, des moyens d'écrasement et d'éclatement des capsules des tiges végétales. Par exemple, le système d'écapsulage 42 peut comprendre une fente fixe (non représentée) à travers laquelle les capsules sont passées de force, ainsi que des rouleaux dits écraseurs (non représentés) venant écraser les capsules pour laisser apparaître les graines qui y sont contenues. Par ailleurs, un dispositif d'éclatement 46, par exemple sous la forme d'un batteur, peut alors être prévu pour battre les tiges et les capsules écrasées de manière à faire éclater les capsules.

Le système d'écapsulage 42 comporte alors le dispositif de traitement 2 tel que décrit précédemment, permettant de séparer les capsules et les graines, des tiges végétales de la nappe continue. Les tiges végétales continuent d'être acheminées par les moyens d'acheminement 44, par exemple jusqu'à des moyens d'étalement sur le sol sous forme d'andain.

De leur côté, les capsules et les graines sont acheminées vers un autre dispositif de séparation (non représenté) permettant de séparer les morceaux de capsules d'un côté et les graines de l'autre.

Ainsi, grâce au dispositif de traitement selon la présente invention, il devient possible de séparer les capsules et les graines de tiges végétales, tout en limitant les risques d'enroulement et d'enchevêtrement de fibres autour des moulins. En particulier, le dispositif selon la présente invention permet d'améliorer la fiabilité globale du dispositif, tout en conservant différents degré de liberté en cas de corps étrangers ou de bourrage, et tout en permettant un accès et un entretien facilité.

## Revendications

1. Dispositif de traitement (2) de tiges végétales comportant des capsules de graines, notamment éclatées, et se déplaçant dans une première direction (D), sous forme d'une nappe continue s'étendant dans un plan, le dispositif (2) comportant un châssis (16) et un premier moulin (1) s'étendant selon un axe longitudinal (A) entre une extrémité avant (4) et une extrémité arrière (6), le premier moulin (1) comprenant un corps (8), par exemple de forme générale cylindrique ou conique, comportant une surface périphérique (10),
dans lequel au moins une portion du premier moulin (1) s'étend sensiblement parallèlement au plan de la nappe continue,
dans lequel l'axe longitudinal (A) du premier moulin (1) est incliné par rapport à la première direction (D), de manière à venir balayer la surface des tiges végétales de la nappe continue,
dans lequel l'extrémité avant (4) du premier moulin (1) est positionnée en amont de l'extrémité arrière (6) dans le sens de déplacement de la nappe de tiges végétales,
dans lequel le premier moulin (1) comporte également des moyens de raclage (12) montés sur la surface périphérique (10) du corps (8), les moyens de raclage (12) s'étendant sensiblement entre l'extrémité avant et l'extrémité arrière du premier moulin (1), et comportant chacun une extrémité avant (18) et une extrémité arrière (20),
dans lequel l'extrémité avant (4) du premier moulin (1) est une extrémité libre et dans lequel le premier moulin (1) est monté sur le châssis (16) du dispositif de traitement par son extrémité arrière (6),
**caractérisé en ce que** le dispositif comprend un moteur (24), comportant un rotor (26),
monté entre le châssis (16) et le premier moulin (1) afin de faire tourner le premier moulin (1) sur lui-même,
et **en ce que** le rotor (26) du moteur est solidaire du premier moulin (1) et est monté à l'intérieur du premier moulin (1).

2. Dispositif de traitement (2) selon la revendication 1 dans lequel l'extrémité avant (4) du premier moulin (1) est une extrémité arrondie, de préférence lisse, par exemple une extrémité convexe telle un cône.

3. Dispositif de traitement (2) selon la revendication 1 ou 2, dans lequel le rotor (26) du moteur est monté sensiblement au milieu du premier moulin (1) et plus préférentiellement à proximité du centre de gravité du premier moulin (1).

4. Dispositif de traitement (2) selon l'une quelconque des revendications précédentes, dans lequel le stator du moteur est monté à l'intérieur du premier moulin (1), de préférence sensiblement au milieu du premier moulin (1) et plus préférentiellement à proximité du centre de gravité du premier moulin (1).

5. Dispositif de traitement (2) selon l'une quelconque des revendications précédentes, dans lequel les moyens de raclage (12) s'étendent selon une direction longitudinale ou selon une forme hélicoïdale.

6. Dispositif de traitement (2) selon l'une quelconque des revendications précédentes, dans lequel les moyens de raclage (12) sont montés de manière amovible sur la surface périphérique (10) du corps du premier moulin, par exemple par serrage latéral, de préférence entre leurs extrémités avant et arrière, et/ou par maintien au niveau de leurs extrémités avant et arrières.

7. Dispositif de traitement (2) selon l'une quelconque des revendications précédentes, dans lequel le premier moulin comporte un cône (14), de préférence lisse, monté sur l'extrémité avant (4) du premier moulin, par exemple à l'extrémité avant du corps (8) du premier moulin, et recouvrant, au moins partiellement, l'interface entre les moyens de raclage (12) et la surface périphérique (10) du corps du premier moulin au niveau de l'extrémité avant.

8. Dispositif de traitement (2) selon l'une quelconque des revendications précédentes, dans lequel le premier moulin (1) est monté sur le châssis (16) via un moyen d'inclinaison (30) configuré pour incliner l'axe longitudinal (A) du premier moulin (1) par rapport au plan de la nappe continue de tiges végétales, de préférence de manière à éloigner l'extrémité avant (4) du premier moulin de la nappe continue.

9. Dispositif de traitement (2) selon l'une quelconque des revendications précédentes, comportant en outre un deuxième moulin (1') identique au premier moulin (1), les premier et deuxième moulins (1, 1') étant disposés de part et d'autre du plan de la nappe continue de tiges végétales, et dans lequel au moins une portion du deuxième moulin (1') s'étend sensiblement parallèlement au plan de la nappe continue.

10. Dispositif de traitement (2) selon la revendication précédente, dans lequel le premier et/ou le deuxième moulin est monté sur le châssis (16) via un moyen d'écartement (32), éventuellement commandé, configuré pour modifier la distance entre le premier moulin (1) et le deuxième moulin (1') par translation du premier et/ou du deuxième moulin, de préférence de manière à modifier l'espacement entre les premier et deuxième moulins au niveau de la nappe continue.

11. Engin, automoteur ou tracté, comportant un système d'écapsulage (42) comprenant un dispositif de traitement (2) de tiges végétales selon l'une quelconque des revendications précédentes, pour balayer la surface des tiges végétales comportant des capsules de graines, notamment éclatées.

12. Engin selon la revendication précédente, dans lequel ledit dispositif de traitement (2) est monté, dans ledit système d'écapsulage (42) et dans le sens d'acheminement des graines, en aval d'un dispositif d'écrasement et d'éclatement (46) des capsules de tiges végétales, et en amont d'un dispositif de séparation, de manière à successivement casser les capsules des tiges végétales, séparer lesdites capsules cassées des tiges végétales et isoler les graines du reste des capsules,
lesdites opérations étant réalisées de manière continue pendant le déplacement de l'engin.

13. Engin selon la revendication 11 ou 12, comportant également des moyens de ramassage et des moyens d'étalage, dans lequel ledit dispositif de traitement (2) est monté en aval des moyens de ramassage et en amont des moyens d'étalage, de manière à successivement ramasser les tiges végétales, par exemple au moins un andain, traiter les tiges végétales et étaler les tiges végétales, lesdites opérations étant réalisées de manière continue pendant le déplacement de l'engin.

## Patentansprüche

1. Behandlungsvorrichtung (2) von Pflanzenstängeln, die, insbesondere aufgeplatzte, Samenkapseln aufweisen und sich in einer ersten Richtung (D) in Form einer kontinuierlichen Bahn, die sich in einer Ebene erstreckt bewegen, wobei die Vorrichtung (2) einen Rahmen (16) und eine erste Mühle (1) aufweist, die sich entlang einer Längsachse (A) zwischen einem vorderen Ende (4) und einem hinteren Ende (6) erstreckt, die erste Mühle (1) umfassend einen Körper (8) von zum Beispiel einer generell zylindrischen oder konischen Form, der eine Umfangsfläche (10) aufweist,
wobei sich mindestens ein Teil der ersten Mühle (1) im Wesentlichen parallel zu der Ebene der kontinuierlichen Bahn erstreckt,
wobei die Längsachse (A) der ersten Mühle (1) in Bezug auf die erste Richtung (D) geneigt ist, sodass sie über die Oberfläche der Pflanzenstängel der kontinuierlichen Bahn streicht,
wobei das vordere Ende (4) der ersten Mühle (1) in der Bewegungsrichtung der Pflanzenstängelbahn stromaufwärts von dem hinteren Ende (6) positioniert ist,
wobei die erste Mühle (1) auch Abstreifeinrichtungen (12) aufweist, die an der Umfangsfläche (10) des Körpers (8) angebracht sind, wobei sich die Abstreifeinrichtungen (12) im Wesentlichen zwischen dem vorderen Ende und dem hinteren Ende der ersten Mühle (1) erstrecken und jeweils ein vorderes Ende (18) und ein hinteres Ende (20) aufweisen,
wobei das vordere Ende (4) der ersten Mühle (1) ein freies Ende ist und wobei die erste Mühle (1) mit ihrem hinteren Ende (6) an dem Rahmen (16) der Behandlungsvorrichtung montiert ist,
**dadurch gekennzeichnet, dass** die Vorrichtung einen Motor (24) umfasst, der einen Rotor (26) aufweist, der zwischen dem Rahmen (16) und der ersten Mühle (1) montiert ist, um die erste Mühle (1) um sich selbst drehen zu lassen,
und dass der Rotor (26) des Motors fest mit der ersten Mühle (1) verbunden ist und innerhalb der ersten Mühle (1) montiert ist.

2. Behandlungsvorrichtung (2) nach Anspruch 1, wobei das vordere Ende (4) der ersten Mühle (1) ein abgerundetes, vorzugsweise glattes Ende ist, z. B. ein konvexes Ende, wie beispielsweise ein Kegel.

3. Behandlungsvorrichtung (2) nach Anspruch 1 oder 2, wobei der Rotor (26) des Motors im Wesentlichen in der Mitte der ersten Mühle (1) und bevorzugter in der Nähe des Schwerpunkts der ersten Mühle (1) montiert ist.

4. Behandlungsvorrichtung (2) nach einem der vorherigen Ansprüche, wobei der Stator des Motors innerhalb der ersten Mühle (1), vorzugsweise im Wesentlichen in der Mitte der ersten Mühle (1) und bevorzugter in der Nähe des Schwerpunkts der ersten Mühle (1) montiert ist.

5. Behandlungsvorrichtung (2) nach einem der vorherigen Ansprüche, wobei sich die Abstreifeinrichtungen (12) in einer Längsrichtung oder in einer schraubenförmigen Form erstrecken.

6. Behandlungsvorrichtung (2) nach einem der vorherigen Ansprüche, wobei die Abstreifeinrichtungen (12) lösbar an der Umfangsfläche (10) des Körpers der ersten Mühle montiert sind, z. B. durch seitliches Einklemmen, vorzugsweise zwischen ihrem vorderen und hinteren Ende, und/oder durch Halten an ihrem vorderen und hinteren Ende.

7. Behandlungsvorrichtung (2) nach einem der vorherigen Ansprüche, wobei die erste Mühle einen vorzugsweise glatten Konus (14) aufweist,
der an dem vorderen Ende (4) der ersten Mühle, z. B. an dem vorderen Ende des Körpers (8) der ersten Mühle, montiert ist und die Schnittstelle zwischen den Abstreifeinrichtungen (12) und der Umfangsfläche (10) des Körpers der ersten Mühle an dem vorderen Ende zumindest teilweise abdeckt.

8. Behandlungsvorrichtung (2) nach einem der vorherigen Ansprüche, wobei die erste Mühle (1) über Neigungseinrichtungen (30), die konfiguriert sind, um die Längsachse (A) der ersten Mühle (1) in Bezug auf die Ebene der kontinuierlichen Bahn von Pflanzenstängeln zu neigen, vorzugsweise um das vordere Ende (4) der ersten Mühle von der kontinuierlichen Bahn weg zu bewegen, an dem Rahmen (16) montiert ist.

9. Behandlungsvorrichtung (2) nach einem der vorherigen Ansprüche, die ferner eine zweite Mühle (1') aufweist, die mit der ersten Mühle (1) identisch ist, wobei die erste und die zweite Mühle (1, 1') auf beiden Seiten der Ebene der kontinuierlichen Bahn von Pflanzenstängeln angeordnet sind und wobei sich mindestens ein Teil der zweiten Mühle (1') im Wesentlichen parallel zu der Ebene der kontinuierlichen Bahn erstreckt.

10. Behandlungsvorrichtung (2) nach dem vorherigen Anspruch, wobei die erste und/oder die zweite Mühle über optional gesteuerte Abstandseinrichtungen (32) an dem Rahmen (16) montiert sind, die konfiguriert sind, um den Abstand zwischen der ersten Mühle (1) und der zweiten Mühle (1') durch Translation der ersten und/oder der zweiten Mühle zu verändern, vorzugsweise, um den Abstand zwischen der ersten und der zweiten Mühle an der kontinuierlichen Bahn zu verändern.

11. Maschine, selbstfahrend oder gezogen, das ein Kapselungssystem (42) aufweist, umfassend eine Behandlungsvorrichtung (2) von Pflanzenstängeln nach einem der vorherigen Ansprüche, um über die Oberfläche der Pflanzenstängel, die Samenkapseln, insbesondere aufgeplatzte Samenkapseln, aufweisen, zu streichen.

12. Maschine nach dem vorherigen Anspruch, wobei die Behandlungsvorrichtung (2) in dem Kapselungssystem (42) und in der Förderrichtung der Samen stromabwärts von einer Quetsch- und Aufbrechvorrichtung (46) der Kapseln der Pflanzenstängel montiert ist, und stromaufwärts von einer Trennvorrichtung, sodass nacheinander die Kapseln der Pflanzenstängel aufgebrochen, die aufgebrochenen Kapseln von den Pflanzenstängeln getrennt und die Samen vom Rest der Kapseln isoliert werden, wobei diese Vorgänge kontinuierlich während der Bewegung des Geräts durchgeführt werden.

13. Maschine nach Anspruch 11 oder 12, die auch Sammel- und Ausbreiteinrichtungen aufweist, wobei die Behandlungsvorrichtung (2) stromabwärts von den Sammeleinrichtungen und stromaufwärts von den Ausbreiteinrichtungen montiert ist, um nacheinander die Pflanzenstängel, z. B. mindestens eine Schwade, zu sammeln, die Pflanzenstängel zu behandeln und die Pflanzenstängel auszubreiten, wobei diese Vorgänge kontinuierlich während der Bewegung der Maschine durchgeführt werden.

## Claims

1. A device (2) for processing plant stems comprising seed capsules, in particular burst seed capsules, and moving in a first direction (D), in the form of a continuous sheet extending in a plane, the device (2) comprising a chassis (16) and a first mill (1) extending along a longitudinal axis (A) between a front end (4) and a rear end (6), the first mill (1) comprising a body (8), for example of generally cylindrical or conical shape, comprising a peripheral surface (10),
wherein at least one portion of the first mill (1) extends substantially parallel to the plane of the continuous sheet,
wherein the longitudinal axis (A) of the first mill (1) is inclined relative to the first direction (D), so as to sweep the surface of the plant stems of the continuous sheet,
wherein the front end (4) of the first mill (1) is positioned upstream of the rear end (6) in the direction of movement of the sheet of plant stems,
wherein the first mill (1) also comprises scraping means (12) mounted on the peripheral surface (10) of the body (8), the scraping means (12) extending substantially between the front end and the rear end of the first mill (1), and each comprising a front end (18) and a rear end (20),
wherein the front end (4) of the first mill (1) is a free end,
and wherein the first mill (1) is mounted on the frame (16) of the processing device via its rear end (6),
**characterized in that** the device comprises a motor (24) comprising a rotor (26) mounted between the frame (16) and the first mill (1) in order to rotate the first mill (1) on itself,
and **in that** the rotor (26) of the motor is secured to the first mill (1) and is mounted inside the first mill (1).

2. The processing device (2) according to claim 1, wherein the front end (4) of the first mill (1) is a rounded end, preferably smooth, for example a convex end such as a cone.

3. The processing device (2) according to claim 1 or 2, wherein the rotor (26) of the motor is mounted substantially in the middle of the first mill (1) and more preferentially proximate to the center of gravity of the first mill (1).

4. The processing device (2) according to any one of the preceding claims, wherein the stator of the motor is mounted inside the first mill (1), preferably substantially in the middle of the first mill (1) and more preferentially proximate to the center of gravity of the first mill (1).

5. The processing device (2) according to any one of the preceding claims, wherein the scraping means (12) extend in a longitudinal direction or in a helical shape.

6. The processing device (2) according to any one of the preceding claims, wherein the scraping means (12) are mounted removably on the peripheral surface (10) of the body of the first mill, for example by lateral clamping, preferably between their front and rear ends, and/or by holding at their front and rear ends.

7. The processing device (2) according to any one of the preceding claims, wherein the first mill comprises a cone (14), preferably smooth, mounted on the front end (4) of the first mill, for example at the front end of the body (8) of the first mill, and covering, at least partially, the interface between the scraping means (12) and the peripheral surface (10) of the body of the first mill at the front end.

8. The processing device (2) according to any one of the preceding claims, wherein the first mill (1) is mounted on the frame (16) via tilting means (30) configured to tilt the longitudinal axis (A) of the first mill (1) relative to the plane of the continuous sheet of plant stems, preferably so as to distance the front end (4) of the first mill from the continuous sheet.

9. The processing device (2) according to any one of the preceding claims, further comprising a second mill (1') identical to the first mill (1), the first and second mills (1, 1') being arranged on either side of the plane of the continuous sheet of plant stems, and wherein at least one portion of the second mill (1') extends substantially parallel to the plane of the continuous sheet.

10. The processing device (2) according to the preceding claim, wherein the first and/or second mill is mounted on the frame (16) via a spacing means (32), optionally controlled, configured to modify the distance between the first mill (1) and the second mill (1') by translation of the first and/or the second mill, preferably so as to modify the spacing between the first and second mills at the continuous sheet.

11. A machine, self-propelled or towed, comprising a decapsulating system (42) comprising a device (2) for processing plant stems according to any one of the preceding claims, for sweeping the surface of the plant stems comprising seed capsules, in particular burst seed capsules.

12. The machine according to the preceding claim, wherein said processing device (2) is mounted, in said decapsulating system (42) and in the direction of transport of the seeds, downstream of a device (46) for crushing and bursting plant stem capsules, and upstream of a separation device, so as to successively break the plant stem capsules, separate said broken capsules from the plant stems, and isolate the seeds from the rest of the capsules,
said operations being carried out continuously while the machine is moving.

13. The machine according to claim 11 or 12, also comprising collection means and spreading means, wherein said processing device (2) is mounted downstream of the collection means and upstream of the spreading means, so as to successively pick up the plant stems, for example at least one windrow, process the plant stems, and spread out the plant stems, said operations being carried out continuously while the machine is moving.
